# FASCICULE DE BREVET EUROPEEN

(11) **EP 1 475 511 B1**
(45) Date de publication et mention de la délivrance du brevet: **12.04.2006**
(21) Numéro de dépôt: 04291132.1
(22) Date de dépôt: 04.05.2004
(51) Int. Cl.: E21B 15/04

(54) **Machine de forage omnidirectionnelle**
Bohrmaschine für alle Richtungen
Omni-directional drilling machine

(30) Priorité: 07.05.2003 FR 0305598
(43) Date de publication de la demande: 10.11.2004
(73) Titulaire: COMPAGNIE DU SOL, 92000 Nanterre (FR)
(72) Inventeur: Perpezat, Daniel Compagnie du Sol, 92000 Nanterre (FR); Lohier, Richard Compagnie du Sol, 92000 Nanterre (FR); Francois, Philippe Compagnie du Sol, 92000 Nanterre (FR)
(74) Mandataire: Dronne, Guy

(56) Documents cités:
- EP-A- 0 861 967
- FR-A- 2 248 402
- FR-A- 2 294 798
- US-A- 2 690 896
- US-A- 3 181 623

## Description

La présente invention a pour objet une machine de forage omnidirectionnelle pour réaliser des forages d'orientation très variable.

On sait qu'on peut réaliser des forages profonds sensiblement verticaux dans le sol à l'aide de machines de forage à train de tiges. On peut également être amené à réaliser des forages dont les orientations peuvent être très variables et pour lesquelles le point d'attaque du forage dont la paroi de la structure à forer peut être d'un accès délicat.

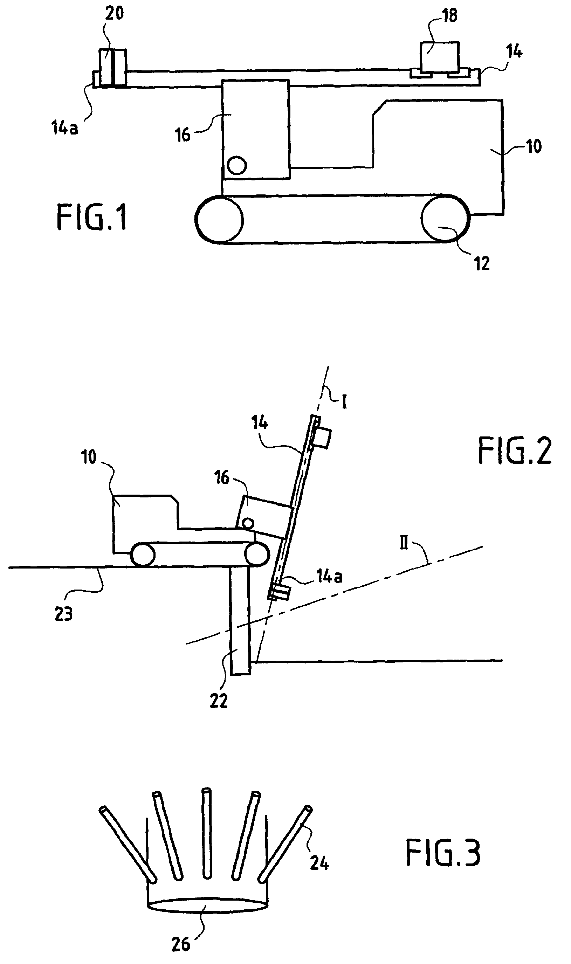

L'invention concerne le deuxième type de machine de forage dont on a représenté sur la figure 1 les éléments constitutifs principaux.

Sur la figure 1 annexée, on a représenté le corps ou support 10 de la machine de forage qui est le plus souvent équipé de chenilles 12. Sur le corps 10 est monté un système de positionnement d'un mât de guidage 14, ce système de positionnement portant sur cette figure la référence générale 16. Comme cela est bien connu, le mât 14 sert de glissière de guidage pour un outil de forage non représenté sur les figures qui est entraîné en rotation et en translation par la tête de rotation 18 de cette machine par l'intermédiaire de tiges. A l'extrémité active du mât 14, on prévoit en général un double frein 20 qui permet la solidarisation d'une nouvelle tige du train de tige d'entraînement en rotation de l'outil de forage avec les tiges déjà utilisées.

Avec ce type de machine de forage, un élément essentiel consiste dans la réalisation du système de positionnement 16 du mât 14 pour permettre au mât de forage d'atteindre toutes les positions nécessaires à la réalisation du forage et toutes les orientations du mât également nécessaires à ce forage.

Il existe un très grand nombre de systèmes de positionnement du mât de guidage qui permettent d'obtenir les différentes orientations et positionnements de l'outil de forage. De tels dispositifs sont décrits dans les documents FR-A-2 294 798 et US-A-3 181 623. On comprend que plus le système de positionnement est complexe, plus il permettra d'atteindre ou de réaliser un grand nombre d'orientations de l'outil mais plus la conduite du système de positionnement par l'utilisateur de la machine sera longue et complexe. A l'opposé, si le système de positionnement est trop limité, il ne pourra permettre aisément de prendre certaines positions de l'outil de forage, c'est-à-dire du mât qu'il est souhaitable de lui voir prendre. Par exemple, sur la figure 2, on a représenté la position 1 que peut prendre le mât de forage 14 avec des machines de forage connues qui ne permettent pas de réaliser un forage dans une digue 22 réalisée en dessous de la surface 24 sur laquelle l'outil de forage est disposé. En trait mixte repéré par le chiffre II, on a indiqué l'orientation qu'il serait indispensable que le mât de forage puisse prendre.

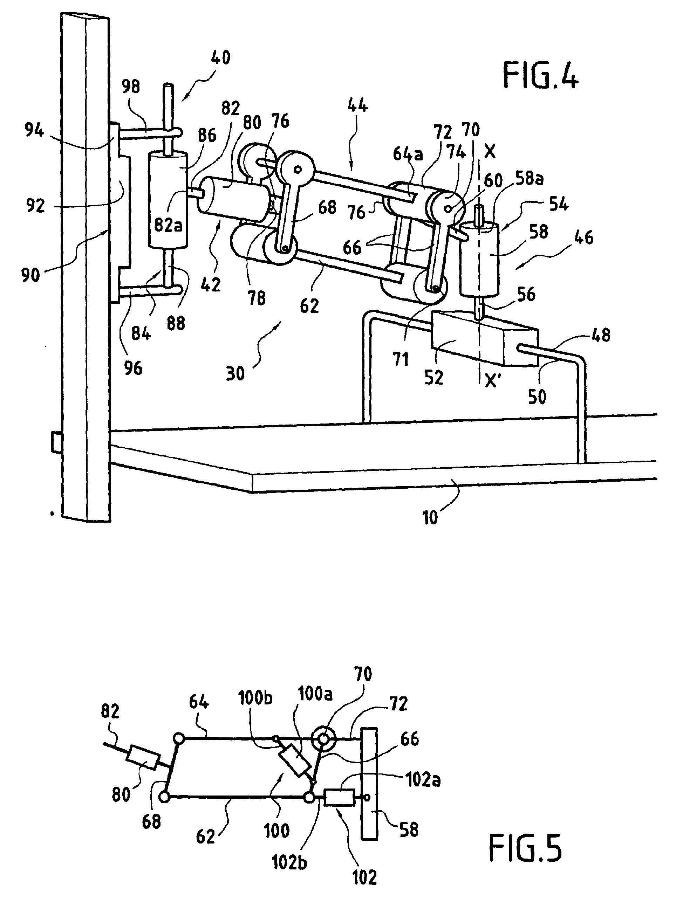

Sur la figure 3 annexée, on a également représenté un exemple de forage 24 qu'il est nécessaire de réaliser pour renforcer les parois d'un tunnel 26 par la mise en place de tirants dans les forages 24.

On comprend qu'un élément déterminant de la rentabilisation d'une telle machine de forage est que la mise en place du mât de forage pour réaliser les forages successifs nécessite le moins de temps possible tout en assurant une orientation et un positionnement précis. En particulier, on comprend que les différents organes cinématiques du système de positionnement 16 doivent permettre les différents mouvements assurant l'orientation finale du mât. La mise en place du mât et donc la commande du système de positionnement est d'autant plus délicate si la commande d'un des organes du système de positionnement vient modifier le positionnement déjà réalisé par l'actionnement d'organes disposés "en amont" dans le système de positionnement. Dans une telle situation, la position finale ne peut être obtenue que par des approximations successives qui requièrent un temps important, ainsi qu'une grande maîtrise de la machine et, plus particulièrement, de son système de positionnement.

Un objet de la présente invention est de fournir une machine de forage du type représenté sur la figure 1 qui permette en particulier de réaliser notamment des forages dans les conditions illustrées par les figures 2 et 3 et dans lesquelles le système de positionnement du mât permet des réglages successifs simples et n'entraînant pas une modification des réglages réalisés précédemment.

Pour atteindre ce but selon l'invention, la machine de forage comprenant un support, un mât de guidage pour recevoir un outil de forage et un système de positionnement du mât par rapport au support pour donner au mât une position et une orientation souhaitées, est caractérisée en ce que ledit système de positionnement comprend :
- une structure en forme de parallélogramme déformable;
- un deuxième système de liaison mécanique pour relier ledit parallélogramme audit support ;
- un arbre monté rotatif autour de son propre axe par rapport à un côté du parallélogramme, ledit arbre étant assujetti à rester dans le plan dudit parallélogramme, l'angle entre ledit arbre et ledit côté étant constant ;
- des premiers moyens de commande pour simultanément maintenir fixe un sommet du parallélogramme par rapport audit deuxième système de liaison mécanique et pour commander un mouvement de pivotement du côté du parallélogramme associé audit arbre rotatif, autour dudit sommet fixe ;
- des deuxièmes moyens de commande, indépendants des premiers moyens, pour commander un mouvement de translation dudit arbre rotatif dans le plan du parallélogramme ; et
- un premier système de liaison mécanique pour relier une extrémité dudit arbre rotatif audit mât de telle manière que la projection de l'axe longitudinal du mât dans le plan du parallélogramme fasse un angle constant avec ledit arbre.

On comprend que dans ce mode de réalisation simplifié, en choisissant convenablement la position et l'orientation du support de la machine, il est possible en commandant la position des côtés du parallélogramme, de donner au mât de guidage de l'outil de forage l'orientation souhaitée dans un plan vertical à l'aide des premiers moyens de commande, puis, sans modifier cette orientation, on peut, à l'aide des deuxièmes moyens de commande, déplacer le mât pour amener son extrémité active en regard du point de la surface où le forage doit être réalisé ou effectuer les deux opérations dans l'ordre inverse.

Il est donc clair que la commande du système de positionnement de la machine de forage est grandement simplifiée.

Selon un premier mode de mise en oeuvre, la machine de forage est caractérisée en ce que ledit arbre rotatif est monté sur un côté du parallélogramme, en ce que lesdits premiers moyens de commande comprennent un axe horizontal lié audit deuxième système de liaison mécanique et les moyens pour commander le pivotement global dudit parallélogramme autour dudit axe horizontal et en ce que lesdits deuxièmes moyens de commande comprennent des moyens pour maintenir fixe l'orientation du côté du parallélogramme associé audit arbre rotatif, et des moyens pour modifier l'orientation des côtés du parallélogramme reliés à celui qui est muni dudit arbre rotatif.

Selon ce premier mode de réalisation, l'orientation du mât de forage est obtenue par la rotation globale du parallélogramme autour d'un de ses sommets. Lorsque l'orientation souhaitée a été obtenue, à l'aide de moyens de commande séparés, l'opération provoque la déformation du parallélogramme pour amener le mât de forage en regard du point de la surface où le forage doit avoir lieu.

Selon un deuxième mode de mise en oeuvre, la machine est caractérisée en ce que lesdits premiers moyens de commande comprennent des moyens pour maintenir fixe par rapport au deuxième système de liaison mécanique un côté du parallélogramme relié au côté associé à l'arbre rotatif et des moyens pour déplacer en translation le côté du parallélogramme parallèle au côté fixe et en ce que lesdits deuxièmes moyens comprennent une pièce de fixation sur laquelle est monté ledit arbre rotatif, des moyens pour maintenir ladite pièce de fixation parallèle audit côté du parallélogramme et pour déplacer ladite pièce de fixation par rapport audit côté associé à l'arbre rotatif et des moyens pour provoquer simultanément le pivotement des côtés du parallélogramme liés au côté associé à l'arbre rotatif.

Selon ce deuxième mode de réalisation, l'arbre rotatif est monté sur une pièce de fixation assujettie à rester parallèle au côté du parallélogramme associé à l'arbre rotatif. Pour obtenir l'orientation du mât, un côté du parallélogramme relié au côté associé à l'arbre rotatif est maintenu fixe alors que le côté du parallélogramme qui lui est parallèle est déplacé en translation. On obtient ainsi un mouvement de pivotement de la pièce de fixation. Pour placer l'extrémité du mât en regard du point de la surface où le forage doit être réalisé, on déplace en translation la pièce de fixation.

Selon un mode préféré de mise en oeuvre, le premier système de liaison mécanique comprend des moyens formant un axe de pivotement dudit mât par rapport audit arbre autour d'un axe parallèle à la direction longitudinale dudit mât.

Grâce à cette possibilité de pivotement du mât autour d'un axe parallèle à la longueur du mât de guidage, il est possible d'amener l'outil de forage dans une position qui permet à l'opérateur de voir en permanence l'outil et ainsi d'accroître la sécurité dans l'utilisation de la machine.

De préférence également, ledit premier système de liaison mécanique comprend des moyens de guidage en translation dudit mât par rapport audit arbre de telle manière que l'axe longitudinal dudit mât reste globalement invariant. Cette possibilité de déplacement en translation du mât permet de mettre l'extrémité active du mât en appui sur la surface à forer.

De préférence également, la machine comporte un deuxième système de liaison mécanique entre le support et le parallélogramme, ce deuxième système de liaison mécanique comportant un arbre vertical monté pivotant autour de son propre axe par rapport au support, l'axe de pivotement de la structure formant parallélogramme déformable étant solidaire en rotation dudit arbre vertical.

On comprend que, dans ce mode de réalisation particulier, il est possible, par exemple, de déplacer globalement en rotation le mât de guidage autour d'un même axe vertical sans par ailleurs modifier les autres réglages correspondant aux organes du système d'orientation décrits précédemment.

D'autres caractéristiques et avantages de l'invention apparaîtront mieux à la lecture de la description qui suit de plusieurs modes de réalisation de l'invention donnés à titre d'exemples non limitatifs. La description se réfère aux figures annexées, sur lesquelles :
- la figure 1, déjà décrite, montre de façon simplifiée une machine de forage connue ;
- les figures 2 et 3 illustrent des positions et orientations que le mât de guidage de l'outil de forage doit pouvoir atteindre pour que la machine de forage puisse être utilisée dans des conditions optimales ;
- la figure 4 est une vue en perspective simplifiée montrant l'ensemble de la cinématique du système de positionnement du mât ;

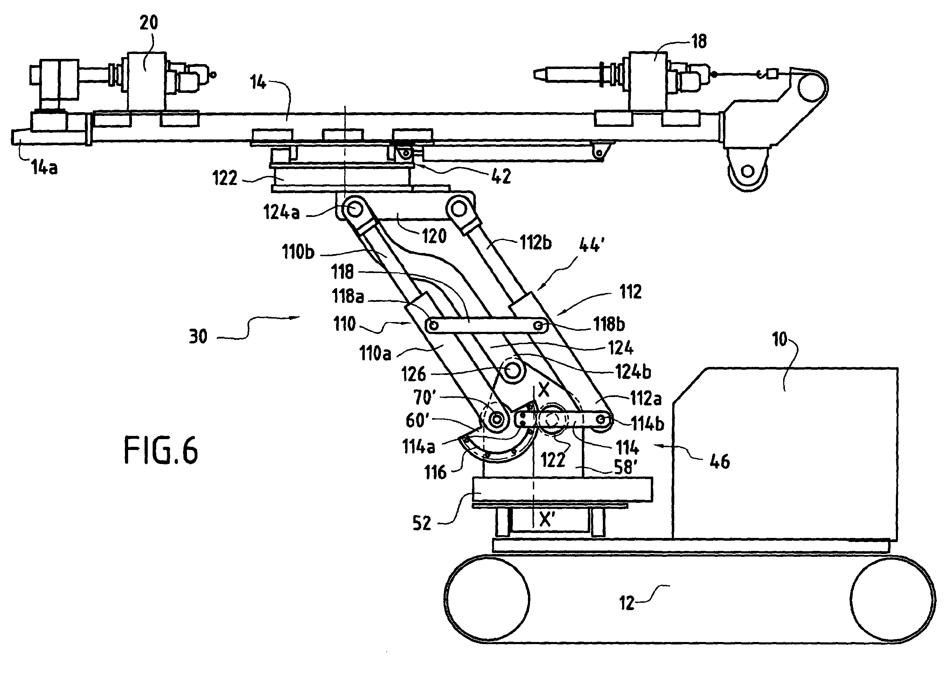

- la figure 5 illustre de façon simplifiée un mode possible de réalisation de la commande du parallélogramme ; et
- la figure 6 montre un mode préféré de réalisation du parallélogramme déformable et de sa commande.

La figure 4 annexée montre, sous forme simplifiée, la cinématique du système de positionnement 30 du mât 14 par rapport au support mobile.

Ce système de positionnement comporte tout d'abord un premier système de liaison mécanique 40 qui est monté sur le mât 14, puis un ensemble formant un arbre rotatif 42, un ensemble mécanique formant un parallélogramme déformable 44 et enfin un deuxième système de liaison mécanique 46 monté sur le support 10.

Le deuxième système de liaison mécanique 46 comprend d'abord des moyens de déplacement en translation 48 qui sont essentiellement constitués par un rail de guidage 50 orthogonal à la longueur du support 10 et qui permet de guider en translation un chariot 52. Le deuxième système de liaison mécanique 46 comporte également des moyens de pivotement 54 qui sont constitués par un axe vertical 56 solidaire du chariot 52 sur lequel est montée à pivotement une pièce verticale 58 qui est cylindrique sur la figure. A son extrémité supérieure 58a, la pièce 58 est munie d'un bras rayonnant 60 solidaire en rotation de cette pièce.

Le parallélogramme déformable 44, dans le mode de réalisation de principe représenté sur la figure 4, comporte deux grands côtés constitués par deux barres de même longueur 62 et 64 et deux petits côtés constitués chacun par une paire de bras parallèles 66 et 68 également de même longueur. L'ensemble du parallélogramme 44 est, dans ce premier mode de réalisation, monté globalement pivotant autour d'un axe horizontal 70 solidaire de l'extrémité du bras 60. Le parallélogramme déformable 44 comprend également une pièce 72 montée pivotante autour de l'axe horizontal 70. La barre supérieure 64 est solidaire par son extrémité 64a de la pièce 72. L'extrémité supérieure des bras 66 est constituée par une pièce circulaire 74 montée pivotante autour de l'axe 70. L'autre extrémité de la barre 64, ainsi que les extrémités de la deuxième barre 62 sont montées pivotantes par rapport aux extrémités correspondantes des bras 66 et 68 formant les petits côtés du parallélogramme.

Ainsi qu'on l'expliquera plus en détails ultérieurement dans ce mode de réalisation, un premier organe de commande permet de faire pivoter le cylindre 72 et donc l'ensemble du parallélogramme 44 autour de l'axe 70, et un deuxième organe de commande permet de déformer le parallélogramme.

De préférence, le parallélogramme 44 est monté pivotant autour d'un axe horizontal 71 qui est disposé à l'extrémité inférieure des bras 66.

Selon le mode de réalisation simplifié représenté sur la figure 4, les bras 68 formant le deuxième petit côté du parallélogramme 44 sont reliés entre eux par une barre transversale horizontale 76. Sur cette barre transversale est monté un premier axe 78 orthogonal au plan défini par les bras 68. Sur ce premier arbre 78 est monté un système de roulement 80 dans lequel est monté à son tour un arbre rotatif 82 aligné avec l'arbre 78. L'extrémité 82a de l'arbre rotatif 82 peut donc être animée d'un mouvement de rotation autour de son propre axe géométrique.

Le premier système de liaison mécanique 40 est monté à l'extrémité 82a de l'arbre rotatif 82. Ce premier système de liaison mécanique comprend un premier ensemble 84 définissant un axe de pivotement parallèle à l'axe longitudinal du mât. L'ensemble 84 peut être constitué par une pièce cylindrique 86 montée à pivotement autour d'un axe 88 parallèle à l'axe longitudinal du mât. Le cylindre 86 est solidaire de l'extrémité 82a de l'arbre rotatif 82. Le premier système de liaison mécanique comporte également de préférence un ensemble 90 de déplacement en translation selon la direction de l'axe longitudinal du mât. Cet ensemble peut être constitué par une pièce en forme d'étrier ou de chariot 92 solidaire du mât et monté libre en translation sur une barre de guidage 94 parallèle à l'axe 88 et reliée à celui-ci par deux bras 96 et 98.

La figure 5 illustre de façon simplifiée un mode possible de réalisation des deux organes de commande du parallélogramme 44. Dans ce mode de réalisation, un premier vérin hydraulique de commande 100 a son corps 100a qui est solidaire du petit côté 66 et l'extrémité de sa tige 100b solidaire du grand côté 64. Lorsque le vérin 100 est au "repos", il maintient une position relative fixe des grands côtés et des petits côtés du parallélogramme 44.

Lorsque le vérin 100 est activé, il permet de modifier l'angle que font entre eux les petits côtés et les grands côtés du parallélogramme. Le deuxième organe de commande, dans ce mode de réalisation, est un deuxième vérin hydraulique 102, dont le corps 102a est solidaire de l'arbre vertical 58 et dont l'extrémité de la tige 102b est solidaire de l'articulation entre le petit côté 66 et le grand côté 62.

Lorsque le premier vérin 100 est au repos, la commande du deuxième vérin 102 permet un pivotement global du parallélogramme 44 autour de l'axe horizontal 70. L'angle de pivotement par rapport à la verticale pourra être compris entre -70 degrés et +110 degrés. Lorsque le vérin 102 est au "repos", le petit côté 66 est fixe et l'actionnement du vérin 100 provoque le déplacement en translation du petit côté 68. En d'autres termes, le vérin 102 permet de fixer l'orientation dans un plan vertical du mât 14. Dans un deuxième temps, le vérin 100 permet de déplacer en translation le mât, c'est-à-dire sans modifier son orientation, pour l'amener en regard du point de la surface où le forage doit être réalisé. Les opérations peuvent être réalisées dans l'ordre inverse.

Il va de soi qu'on pourrait utiliser d'autres modes de commande du parallélogramme dès lors qu'on peut commander séparément le pivotement global du parallélogramme et l'angle que font les grands et les petits côtés, ce qui revient à commander séparément la position absolue des grands côtés et des petits côtés.

Sur la figure 6, on a représenté un deuxième mode préféré de réalisation de l'invention.

Sur cette figure 6 on a représenté le support 10 avec son chariot 52, la pièce rotative verticale 58', qui joue le même rôle que l'arbre vertical 58 de la figure 4 avec son extension 60' équivalente au bras 60, et le mat 14. Cette figure 6 montre en particulier un mode préféré de réalisation du parallélogramme déformable, qui porte la référence 44', et de ses organes de commande.

Les grands cotés du parallélogramme 44' sont constitués par les corps 110a et 112a de deux vérins 110 et 112.

La première extrémité du corps 110a est montée pivotante autour d'un axe horizontal 70' (équivalent à l'axe 70 de la figure 4) porté par l'extension 60'. Le premier petit coté du parallélogramme 44' est constitué par un bras 114 dont une première extrémité 114a est montée pivotante autour de l'axe 70' et solidaire d'un secteur denté 116. La première extrémité du deuxième corps de vérin 112a est articulée à l'extrémité 114b du bras 114. Le deuxième petit coté du parallélogramme est constitué par une paire de barres 118 dont une extrémité 118a est articulée à proximité de la deuxième extrémité du corps de vérin 110a et dont la deuxième extrémité 118b est articulée à proximité de la deuxième extrémité du corps de vérin 112a. Les extrémités libres des tiges de vérin 110b et 112b sont articulées sur une pièce de fixation 120. La pièce de fixation 120 est solidaire d'un système de liaison auréolaire 122 qui remplit la même fonction que le système rotatif 78, 80, 82 de la figure 4.

Il faut ajouter que les deux vérins 110 et 112 sont commandés pour que leurs tiges respectives aient le même déplacement de telle manière que la pièce de fixation 120 reste parallèle aux barres 118. Le secteur denté 116 peut être entraîné en rotation par un moto-réducteur 122 monté sur la pièce rotative 58'. Enfin, la commande du parallélogramme 44' comprend également une paire de tiges 124 dont une première extrémité 124a est articulée sur la pièce de fixation 120 autour du même axe que l'extrémité de la tige de vérin 110a et donc la deuxième extrémité 124b est articulée autour d'un axe 126 porté par la pièce rotative 58' et décalé par rapport à l'axe 70'. Le point 124a de la pièce de fixation 120 est donc assujetti à rester à une distance fixe de l'axe 126.

Le fonctionnement de ce mode préféré de réalisation de l'invention est le suivant :

Lorsque les vérins 110 et 112 sont au repos, l'extrémité de la tige du vérin 110 est fixe en raison de l'action de la barre 124.

Le point 124a de la pièce de liaison 120 est donc fixe. Lorsqu'on commande le moto-réducteur 122, la rotation du bras 114 provoque le déplacement en translation du vérin 112. Le déplacement de l'extrémité de la tige 112b du vérin provoque la rotation de la pièce 120 et donc celle du mât 14. On obtient ainsi l'orientation du mât dans un plan vertical. Cette orientation est maintenue jusqu'à ce qu'on commande à nouveau le moto-réducteur.

Si l'on commande les vérins 110 et 112 de telle façon, comme on l'a déjà indiqué, que leurs tiges se déplacent de la même longueur, la pièce de fixation 120 reste parallèle aux barres 118. Sous l'action du déplacement des tiges des vérins et des barres 118, la pièce de fixation 120 est déplacée en translation dans le plan du parallélogramme 44, c'est-à-dire dans le plan vertical et les corps de vérin pivotent autour de leur extrémité. L'axe du système auréolaire a une direction fixe par rapport aux barres 118 puisque ce système est monté sur la pièce de liaison 120. Le mât 14 fait lui-même un angle constant avec l'axe suite au système auréolaire. Le mât set donc également déplacé en translation, c'est-à-dire que son orientation dans un plan vertical est maintenue.

Le fonctionnement du parallélogramme 44 et du parallélogramme 44' ayant déjà été expliqué, il reste à expliquer le fonctionnement du reste de la machine de forage et, plus précisément du système d'orientation.

L'arbre rotatif 82, ou le système de liaison auréolaire 122, permet d'orienter le mât par rapport au plan vertical contenant le parallélogramme déformable 44 et permet ainsi, par la combinaison des différents mouvements, d'atteindre, pour le mât de guidage, toutes les positions nécessaires et de conférer à ce mât de guidage toutes les orientations nécessaires.

Le premier système de liaison mécanique a des fonctions particulières. La rotation du mât autour de l'axe 88 permet d'orienter le mât de telle manière que l'opérateur puisse voir en permanence l'outil de forage monté sur le mât quelle que soit la position de ce mât. Le système de guidage en translation du mât parallèlement à son axe longitudinal permet dans un réglage final de venir appliquer l'extrémité active 14a du mat contre la surface dans laquelle le forage doit être réalisé.

Les fonctions du deuxième système de liaison mécanique 46 sont évidentes. Le déplacement du chariot 52 permet d'adapter la position transversale du mât par rapport au support 10 sans modifier l'orientation du mât pour réaliser, par exemple une succession de forages parallèles.

La pièce de rotation 58 ou 58' permet un pivotement global du mât 14 autour d'un axe vertical.

## Revendications

1. Machine de forage comprenant un support (10), un mât (14) de guidage pour recevoir un outil de forage et un système de positionnement (30) du mât par rapport au support pour donner au mât une position et une orientation souhaitées, **caractérisée en ce que** ledit système de positionnement comprend :
- une structure en forme de parallélogramme déformable (44, 44');
- un deuxième système de liaison mécanique (46) pour relier ledit parallélogramme audit support ;
- un arbre (82, 122) monté rotatif autour de son propre axe par rapport à un côté (68, 118) du parallélogramme, ledit arbre étant assujetti à rester dans le plan dudit parallélogramme, l'angle entre ledit arbre (82, 122) et ledit côté (68, 118) étant constant ;
- des premiers moyens de commande pour simultanément maintenir fixe un sommet (70, 70') du parallélogramme par rapport audit deuxième système de liaison mécanique et commander un mouvement de pivotement du côté (68, 118) du parallélogramme muni dudit arbre rotatif, autour dudit sommet fixe ;
- des deuxièmes moyens de commande, indépendants des premiers moyens de commande pour commander un mouvement de translation dudit arbre rotatif (82, 122) dans le plan du parallélogramme (44, 44') ; et
- un premier système de liaison mécanique (40) pour relier une extrémité (82a) dudit arbre rotatif audit mât (14) de telle manière que la projection de l'axe longitudinal du mât dans le plan du parallélogramme fasse un angle constant avec ledit arbre.

2. Machine de forage selon la revendication 1, **caractérisée en ce que** ledit arbre rotatif (82) est monté sur un côté (68) du parallélogramme (44), **en ce que** lesdits premiers moyens de commande comprennent un axe horizontal (70) lié audit deuxième système de liaison mécanique (46) et les moyens (102) pour commander le pivotement global dudit parallélogramme (44) autour dudit axe horizontal (70) et **en ce que** lesdits deuxièmes moyens (102) de commande comprennent des moyens (102) pour maintenir fixe l'orientation du côté (68) du parallélogramme associé audit arbre rotatif (82), et des moyens (100) pour modifier l'orientation des côtés du parallélogramme (62, 64) reliés à celui (68) qui est muni dudit arbre rotatif.

3. Machine selon la revendication 1, **caractérisée en ce que** lesdits premiers moyens de commande comprennent des moyens (124) pour maintenir fixe par rapport au deuxième système de liaison mécanique (46) un côté du parallélogramme (110a) relié au côté (118) associé à l'arbre rotatif (122) et des moyens (122) pour déplacer en translation le côté du parallélogramme (112a) parallèle au côté fixe et **en ce que** lesdits deuxièmes moyens comprennent une pièce de fixation (120) sur laquelle est monté ledit arbre rotatif (122), des moyens (110b, 112b) pour maintenir ladite pièce de fixation parallèle audit côté (118) du parallélogramme (44') associé à l'arbre rotatif et pour déplacer ladite pièce de fixation (120) par rapport audit côté associé à l'arbre rotatif et des moyens (110, 112, 114) pour provoquer simultanément le pivotement des côtés (112a, 110a) du parallélogramme (44') liés au côté associé à l'arbre rotatif.

4. Machine selon l'une quelconque des revendications 1 à 3, **caractérisée en ce que** ledit premier système de liaison mécanique (40) comprend des moyens (88, 96, 98) formant un axe de pivotement dudit mât (14) par rapport audit arbre rotatif (82) autour d'un axe parallèle à la direction longitudinale dudit mât.

5. Machine selon l'une quelconque des revendications 1 à 4, **caractérisée en ce que** ledit premier système de liaison mécanique (40) comprend des moyens (90) de guidage en translation dudit mât (14) par rapport audit arbre (82) de telle manière que l'axe longitudinal dudit mât reste globalement invariant.

6. Machine selon l'une quelconque des revendications 1 à 5, **caractérisée en ce qu'**elle comprend en outre un deuxième système de liaison mécanique (46) pour relier ledit sommet pivotant (70, 70') de la structure en forme de parallélogramme (44, 44') audit support (10).

7. Machine selon la revendication 6, **caractérisée en ce que** ledit deuxième système de liaison mécanique (46) comprend un arbre vertical (58) monté pivotant autour de son propre axe (56) par rapport audit support (10), l'axe de pivotement (70, 70') de la structure formant parallélogramme déformable (44, 44') étant solidaire en rotation dudit arbre vertical (58).

8. Machine selon la revendication 7, **caractérisée en ce que** ledit deuxième système de liaison mécanique (46) comprend en outre des moyens de guidage en translation (48) dudit arbre vertical (58) selon une direction orthogonale à l'axe dudit arbre vertical de telle manière que ledit arbre vertical reste dans un même plan vertical.

## Claims

1. A drilling machine comprising a support (10), a guide mast (14) for receiving a drilling tool and a positioning system (30) for positioning the mast relative to the support so as to impart a desired position and a desired direction to the mast, said drilling machine being **characterized in that** said positioning system comprises:
a structure in the form of a deformable parallelogram (44, 44');
a second mechanical link system (46) for connecting said parallelogram to said support;
a rotary shaft (82, 122) mounted to rotate about its own axis relative to a side (68, 118) of the parallelogram, said shaft being constrained to remain in the plane of said parallelogram, the angle between said shaft (82, 122) and said side (68, 118) being constant;
first control means for simultaneously holding a vertex (70, 70') of the parallelogram stationary relative to said mechanical link system and causing the side (68, 118) of the parallelogram that is provided with said rotary shaft to pivot about said stationary vertex;
second contro5l means, independent of the first control means, and for causing said rotary shaft (82, 122) to move in translation in the plane of the parallelogram (44, 44'); and
a first mechanical link system (40) for connecting one end (82a) of said rotary shaft to said mast (14) so that the projection of the longitudinal axis of the mast onto the plane of the parallelogram forms a constant angle with said shaft.

2. A drilling machine according to claim 1, **characterized in that** said rotary shaft (82) is mounted on a side (68) of the parallelogram (44), **in that** said first control means comprise a horizontal axis (70) connected to said second mechanical link system (46) and the means (102) for causing said parallelogram (44) as a whole to pivot about said horizontal axis (70), and **in that** said second control means comprise means (102) for holding stationary the direction of the side (68) of the parallelogram that is associated with said rotary shaft (82), and means (100) for modifying the direction of the sides of the parallelogram (62, 64) that are connected to the side (68) that is provided with said rotary shaft.

3. A machine according to claim 1, **characterized in that** said first control means comprise means (124) for holding a side of the parallelogram (110a) that is connected to the side (118) associated with the rotary shaft (122) stationary relative to the second mechanical link (46), and means (122) for moving the side of the parallelogram (112a) that is parallel to the stationary side in translation, and **in that** said second means comprise a fixing part (120) on which said rotary shaft (122) is mounted, means (110b, 112b) for holding said fixing part parallel to said side (118) of the parallelogram (44') that is associated with the rotary shaft and for moving said fixing part (120) relative to said side associated with the rotary shaft, and means (110, 112, 114) for causing the sides (112a, 110a) of the parallelogram (44') that are connected to the side associated with the rotary shaft to pivot simultaneously.

4. A machine according to any one of claims 1 to 3, **characterized in that** said first mechanical link system (40) has means (88, 96, 98) forming a pivot axis about which said mast (14) can pivot relative to said rotary shaft (82) about an axis parallel to the longitudinal axis of said mast.

5. A machine according to any one of claims 1 to 4, **characterized in that** said first mechanical link system (40) comprises guide means (90) for guiding said mast (14) in translation relative to said shaft (82) so that the longitudinal axis of said mast remains substantially constant.

6. A machine according to any one of claims 1 to 5, **characterized in that** it further comprises a second mechanical link system (46) for connecting said pivotally mounted vertex (70, 70') of the structure in the form of a parallelogram (44, 44') to said support (10).

7. A machine according to claim 6, **characterized in that** said second mechanical link system (46) comprises a vertical shaft (58) mounted to pivot about its own axis (56) relative to said support (10), the pivot axis (70, 70') of the structure forming a deformable parallelogram (44, 44') being constrained to rotate with said vertical shaft (58).

8. A machine according to claim 7, **characterized in that** said second mechanical link system (46) further comprises guide means (48) for guiding said vertical shaft (58) in translation in a direction orthogonal to the axis of said vertical shaft so that said vertical shaft remains in the same vertical plane.

## Patentansprüche

1. Bohrmaschine mit einem Träger (10), einem Führungsmast (14) zur Aufnahme eines Bohrwerkzeugs und einem System (30) zum Positionieren des Mastes bezüglich des Trägers, um dem Mast eine gewünschte Position und Ausrichtung zu geben, **dadurch gekennzeichnet, dass** das Positioniersystem umfasst:
- eine Struktur in Form eines verformbaren Parallelogramms (44, 44');
- ein zweites mechanisches Verbindungssystem (46) zum Verbinden des Parallelogramms mit dem Träger;
- eine Welle (82, 122), die bezüglich einer Seite (68, 118) des Parallelogramms um ihre eigene Achse drehbar montiert ist, wobei die Welle gezwungen ist, in der Ebene des Parallelogramms zu bleiben, wobei der Winkel zwischen der Welle (82, 122) und der Seite (68, 118) konstant ist;
- erste Betätigungsmittel, um eine Spitze (70, 70') des Parallelogramms bezüglich des zweiten mechanischen Verbindungssystems ortsfest zu halten und gleichzeitig eine Schwenkbewegung der mit der rotierenden Welle versehenen Seite (68, 188) des Parallelogramms um die ortsfeste Spitze auszuführen;
- zweite, von den ersten Betätigungsmitteln unabhängige Betätigungsmittel, um eine Translationsbewegung der rotierenden Welle (82, 122) in der Ebene des Parallelogramms (44, 44) auszuführen; und
- ein erstes mechanisches Verbindungssystem (40), um ein Ende (82a) der rotierenden Welle mit dem Mast (14) derart zu verbinden, dass die Projektion der Längsachse des Mastes in der Ebene des Parallelogramms mit der Welle einen konstanten Winkel bildet.

2. Bohrmaschine nach Anspruch 1,
**dadurch gekennzeichnet, dass** die rotierende Welle (82) an einer Seite (68) des Parallelogramms (44) angebracht ist, dass die ersten Betätigungsmittel eine mit dem zweiten mechanischen Verbindungssystem (46) verbundene waagerechte Achse (70) und die Mittel (102) zum Betätigen des gesamten Schwenkens des Parallelogramms (44) um die waagerechte Achse (70) umfassen, und dass die zweiten Betätigungsmittel (102) Mittel (102) umfassen, um die Ausrichtung der Seite (68) des Parallelogramms, die der rotierenden Welle (82) zugeordnet ist, unverändert zu halten, sowie Mittel (100), um die Ausrichtung der Seiten des Parallelogramms (62, 64) zu ändern, die mit derjenigen Seite (68) verbunden sind, welche mit der rotierenden Welle versehen ist.

3. Bohrmaschine nach Anspruch 1,
**dadurch gekennzeichnet, dass** die ersten Betätigungsmittel Mittel (124) umfassen, um eine Parallelogrammseite (110a), die mit der der rotierenden Welle zugeordneten Seite (118) verbunden ist, bezüglich des zweiten mechanischen Verbindungssystems (46) ortsfest zu halten, sowie Mittel (122), um die Parallelogrammseite (112a), die zu der ortsfesten Seite parallel ist, translatorisch zu verschieben, und dass die zweiten Mittel ein Befestigungsteil (120) umfassen, auf dem die rotierende Welle (122) angebracht ist, sowie Mittel (110b, 112b), um das Befestigungsteil parallel zu der der rotierenden Welle zugeordneten Seite (118) des Parallelogramms (44') zu halten und das Befestigungsteil (120) in Bezug auf die der rotierenden Welle zugeordneten Seite zu verschieben, und Mittel (110,112,114), um gleichzeitig das Schwenken der Seiten (112a, 110a) des Parallelogramms (44'), die mit der der rotierenden Welle zugeordneten Seite verbunden sind, zu bewirken.

4. Bohrmaschine nach einem der Ansprüche 1 bis 3,
**dadurch gekennzeichnet, dass** das erste mechanische Verbindungssystem (40) Mittel (88, 96, 98) umfasst, die in Bezug auf die rotierende Welle (82) eine Schwenkachse des Mastes (14) um eine zur Längsrichtung des Mastes parallele Achse bilden.

5. Bohrmaschine nach einem der Ansprüche 1 bis 4,
**dadurch gekennzeichnet, dass** das erste mechanische Verbindungssystem (40) Mittel (90) zum translatorischen Führen des Mastes (14) in Bezug auf die Welle (82) umfasst, so dass die Längsachse des Mastes insgesamt unverändert bleibt.

6. Bohrmaschine nach einem der Ansprüche 1 bis 5,
**dadurch gekennzeichnet, dass** sie ferner ein zweites mechanisches Verbindungssystem (46) umfasst, um die schwenkbare Spitze (70, 70') der Struktur in Form eines Parallelogramms (44, 44') mit dem Träger (10) zu verbinden.

7. Bohrmaschine nach Anspruch 6,
**dadurch gekennzeichnet, dass** das zweite mechanische Verbindungssystem (46) eine senkrechte Welle (58) umfasst, die bezüglich des Trägers (10) um ihre eigene Achse (56) drehbar angebracht ist, wobei die Schwenkachse (70, 70') der ein verformbares Parallelogramm (44, 44') bildenden Struktur drehfest mit der senkrechten Welle (58) verbunden ist.

8. Bohrmaschine nach Anspruch 7,
**dadurch gekennzeichnet, dass** das zweite mechanische Verbindungssystem (46) ferner Mittel (48) zum translatorischen Führen der senkrechten Welle (58) in einer zur Achse der senkrechten Welle orthogonalen Richtung umfasst, so dass die senkrechte Welle in einer gleichen senkrechten Ebene bleibt.
